# DEMANDE DE BREVET EUROPEEN

(11) **EP 3 517 722 A1**
(43) Date de publication de la demande: **31.07.2019**
(21) Numéro de dépôt: 19161159.9
(22) Date de dépôt: 17.10.2014
(51) Int. Cl.: E05G 1/10

(54) **COFFRE DE PROTECTION INTERACTIF**

(30) Priorité: 18.10.2013 FR 1360200
(62) Demande divisionnaire de: 15185582.2
(71) Demandeur: Counas, Pascal, Daniel, Nassau (BS)
(72) Inventeur: Counas, Pascal, Daniel, Nassau (BS)
(74) Mandataire: Santarelli

(57) **Abrégé**

L'invention concerne notamment un coffre de protection interactif comprenant :
- un boîtier comportant un compartiment apte à accueillir au moins un objet à protéger et des moyens de verrouillage assurant une fermeture par serrure ;
- un écran d'affichage apte à afficher des informations ;
- des moyens de traitement aptes à générer des données relatives aux informations à afficher ; et
- des moyens de communication sans fil permettant de communiquer des données avec d'autres équipements électroniques.

## Description

### Domaine technique

L'invention se situe dans le domaine des dispositifs électroniques mobiles et, plus précisément, dans le domaine des appareils mobiles destinés à être portés par un être humain. Elle concerne un tel appareil mobile destiné à équiper un objet de valeur porté autour d'une partie du corps d'une personne, par exemple une montre. Cet appareil mobile, outre ses fonctions techniques d'information et de communication, permet également de protéger un objet de valeur contre les risques de détériorations, en fonction des lieux et du changement d'activité du porteur. L'invention concerne aussi un ensemble comprenant une montre et un appareil mobile équipant la montre, et un ensemble comprenant un appareil mobile et une plateforme interactive. Elle concerne également un coffre de protection interactif et un socle d'accueil pour le coffre de protection interactif.

### État de la technique antérieure

D'une part, le XVI^{ème} siècle voit la naissance de l'horlogerie de luxe, avec une tradition horlogère qui se transmet depuis plus de 400 ans dans les montres mécaniques. D'autre part, la miniaturisation des circuits électroniques et l'augmentation de la capacité des sources d'alimentation portables ont entraîné l'apparition de nombreux appareils électroniques. En particulier, à la fin des années 1960, les premières montres intégrant un oscillateur à quartz sont apparues. Quelques années plus tard, l'affichage analogique à aiguilles a été remplacé par un affichage numérique. Depuis, deux voies principales de développement ont été suivies par les concepteurs de montres, les uns poursuivant la réalisation de montres essentiellement mécaniques, et les autres s'engageant dans la réalisation de montres purement électroniques. Ces deux voies se sont développées en parallèle, sans jamais - ou presque - se chevaucher.

Les montres mécaniques, ou à mouvement mécanique, ont connu un nombre considérable de développements, notamment dans la création de nouvelles complications, mais ces développements se sont presque exclusivement appuyés sur des techniques purement mécaniques, sans faire appel à un quelconque circuit électronique, hormis éventuellement l'oscillateur à quartz et son alimentation. En tout état de cause, les concepteurs de montres mécaniques ont cherché à conserver au maximum un mouvement mécanique pour la mesure et l'affichage du temps, en limitant au maximum l'introduction de circuits électroniques pour réaliser des fonctions annexes. Pour cette raison, les montres mécaniques sont souvent désignées sous l'expression "montres de tradition horlogère".

De plus, les montres mécaniques ont vu leur coût relativement inchangé en comparaison de celui des montres électroniques, lequel a fortement chuté. Ainsi, les montres mécaniques ont progressivement été considérées comme des objets de luxe, avec des prix allant de plusieurs milliers d'euros à plusieurs millions d'euros. Les montres mécaniques de luxe sont fabriquées à environ trois millions d'exemplaires par an et forment un parc mondial d'environ cent millions d'unités.

Par ailleurs, les montres électroniques ont connu un fort développement depuis l'introduction de l'affichage numérique. Le boîtier de la montre a progressivement intégré de nouvelles fonctions, au fur et à mesure de l'augmentation des capacités de calcul et de la diminution de la consommation électrique des circuits intégrés. Certaines montres ont par exemple intégré une fonction calculatrice, un système de positionnement par satellites, ou encore un lecteur de fichiers musicaux numériques. De nos jours, des montres intègrent des fonctions encore plus évoluées, et surtout plus nombreuses, en se basant le plus souvent sur une architecture matérielle et logicielle identique ou similaire à celle d'un appareil mobile. Par appareil mobile, on entend un appareil informatique adapté à être emporté et utilisé lors de déplacements d'un utilisateur. En particulier, l'appareil mobile doit comprendre des moyens d'alimentation autonome en énergie. Il peut notamment s'agir d'un ordinateur portable, d'un assistant numérique personnel ("Personal Digital Assistant" ou PDA en anglais), ou encore d'un téléphone portable intelligent ("smartphone" en anglais). En réalité, les montres électroniques correspondent aujourd'hui à des appareils mobiles prenant la forme générale d'une montre. Elles sont ainsi appelées des montres intelligentes ou "smartwatch" en anglais. Cependant, l'aspect esthétique et l'élégance technique est profondément modifié, et les fonctionnalités offertes rendent l'affichage de l'heure accessoire.

Contrairement aux montres mécaniques, les montres électroniques, même de coût élevé, ne sont pas considérées comme étant des objets de luxe, mais visent une clientèle adepte des nouvelles technologies de l'information et de la communication.

En conséquence, les montres mécaniques et les montres électroniques appartiennent à deux domaines non seulement étrangers l'un à l'autre, mais aussi hermétiques, voire opposés l'un à l'autre. Si une synergie des montres mécaniques et des montres électroniques semble inenvisageable, il n'en reste pas moins que chaque type de montre présente des limitations par rapport aux attentes d'une partie de la clientèle. D'une part, les montres électroniques actuelles souffrent d'un rejet des porteurs de montres mécaniques, ces derniers étant attachés à la noblesse mécanique et à la valeur esthétique de ces montres. D'autre part, les montres mécaniques ne remplissent aucune des fonctions accessibles par les montres intelligentes. Un utilisateur ne peut donc disposer à la fois des caractéristiques de ces deux types de montre, si ce n'est en portant deux montres différentes. Or il s'avère en pratique peu commode de multiplier les éléments portés par une personne, en particulier au poignet en bracelet.

### Exposé de l'invention

Un but de l'invention est notamment de remédier à tout ou partie des inconvénients précités en proposant un nouveau paradigme dans le domaine des montres. Ce paradigme s'appuie sur la possibilité d'intégrer, de préférence de manière réversible, les fonctionnalités d'une montre intelligente sur une montre mécanique. Cette intégration consiste à prévoir un module électronique remplissant les fonctionnalités d'une montre intelligente, et un écran d'affichage relié au module électronique, apte à venir s'accoupler mécaniquement à une montre de type traditionnelle. Plus généralement, l'invention vise à intégrer des fonctionnalités d'applications mobiles sur un objet, notamment un objet de valeur porté ou attaché autour d'une partie d'un être vivant, généralement un être humain. Par objet de valeur, on entend tout bijou tel qu'un bracelet, une montre, une chaîne ou un pendentif, par exemple réalisé dans un métal précieux, et tout dispositif électronique agencé pour être porté par un être vivant. Le dispositif électronique peut notamment être une montre électronique ou un bracelet santé. Lorsque l'appareil mobile équipe une montre électronique, il permet d'ajouter des fonctionnalités à celles déjà présentes dans la montre électronique. Le bracelet santé, également appelé bracelet fitness, prend généralement la forme générale d'une montre bracelet et peut comporter divers capteurs tels qu'un capteur de mouvement, un capteur de température, et un cardio-fréquencemètre. L'objet de valeur peut être porté autour de la taille, du poignet, de la cheville, ou du cou de l'être vivant.

Plus précisément, l'invention concerne un appareil mobile apte à équiper tout objet, notamment un objet de valeur, porté ou attaché autour d'une partie du corps d'un être vivant, de préférence un être humain, l'appareil mobile comprenant :
▪ un module électronique apte à exécuter une application mobile,
▪ un écran d'affichage connecté au module électronique et agencé pour afficher des informations relatives à l'application mobile, et
▪ un support de fixation agencé pour pouvoir fixer de manière amovible l'écran d'affichage à un objet lorsque ledit objet est porté ou attaché autour d'une partie du corps de l'être vivant.

Selon une forme particulière de réalisation, l'appareil mobile est apte à protéger et à équiper, par superposition, tout objet porté ou attaché autour d'une partie du corps d'un être humain, telle que la taille, le poignet, la cheville ou le cou, l'objet comprenant une première surface extérieure destinée à être aisément visible par l'être humain lorsqu'il porte l'objet, l'appareil mobile comprenant :
▪ un module électronique apte à exécuter une application mobile,
▪ un écran d'affichage connecté au module électronique et agencé pour afficher des informations relatives à l'application mobile, et
▪ un support de fixation dont les formes et les dimensions sont agencées pour que l'appareil mobile puisse équiper successivement tout objet porté par l'être humain, et pour pouvoir fixer, de manière amovible et par superposition, au moins l'écran d'affichage à un objet lorsque ledit objet est attaché autour d'une partie du corps de l'être humain,
l'appareil mobile étant agencé de manière à ce que, lorsque l'écran d'affichage est fixé à l'objet, il couvre au moins une partie de la première surface extérieure de cet objet.

Le module électronique doit être capable d'exécuter une ou plusieurs applications mobiles. Par application mobile, on entend tout logiciel informatique contenant une suite d'instructions accomplies en vue de remplir une fonctionnalité donnée. À titre d'exemple, l'application mobile peut consister en un jeu vidéo, un agenda électronique, ou un lecteur de musique numérique. L'appareil mobile peut aussi fournir des applications mobiles dites connectées, c'est-à-dire échangeant des données avec des dispositifs externes, par liaison filaire ou sans fil. En particulier, les applications mobiles peuvent être un client de messagerie électronique, un navigateur web, ou un assistant à la navigation par géolocalisation par satellites. L'appareil mobile selon l'invention peut aussi communiquer avec d'autres appareils mobiles, notamment avec un assistant numérique personnel ou un téléphone mobile. Le module électronique peut alors exécuter des applications mobiles gérant l'émission et la réception d'appels téléphoniques et de minimessages (SMS) par le téléphone mobile, et permettant la consultation à distance d'informations contenues dans un appareil mobile externe, comme un agenda électronique ou des photos. Bien entendu, ces exemples d'applications ne sont pas limitatifs et bien d'autres applications peuvent être envisagées, en fonction des ressources de l'appareil mobile.

L'appareil mobile selon l'invention est prévu pour équiper tout objet, en particulier tout objet de valeur, porté ou attaché autour d'une partie du corps d'un être vivant. En l'occurrence, le support de fixation permet de "greffer" au moins l'écran d'affichage à l'objet de valeur, de sorte que cet objet de valeur présente un écran d'affichage fournissant des fonctionnalités identiques ou similaires à celles de tout appareil mobile. De préférence, l'écran d'affichage est rendu solidaire de l'objet de valeur, ou d'une partie de l'objet de valeur. En particulier, lorsque l'objet de valeur comporte un écran ou une surface affichant des informations, par exemple le cadran d'une montre, l'écran d'affichage de l'appareil mobile selon l'invention est rendu solidaire de l'écran ou de la surface d'affichage des informations. L'écran d'affichage de l'appareil mobile peut également venir recouvrir une autre partie de l'objet ou de l'objet de valeur. Il peut notamment recouvrir le bracelet d'une montre ou les brillants d'une parure.

L'appareil mobile peut notamment équiper tout type de montre, quels que soient leur mécanisme, leur forme, et leur moyen d'attache à un utilisateur. En l'occurrence, la montre peut être une montre-bracelet, une montre gousset, une montre pendentif, une montre mécanique, une montre à quartz, une montre à affichage analogique ou numérique. L'appareil mobile peut en outre équiper un bracelet santé, un bijou ou tout dispositif électronique.

Le module électronique peut comporter un réseau prédiffusé programmable par l'utilisateur, ou FPGA selon l'expression anglo-saxonne "Field Programmable Gâte Array". Il peut aussi comporter une mémoire apte à stocker l'application mobile et des données traitées par l'application mobile, et un processeur ou un microprocesseur apte à exécuter l'application mobile.

L'écran d'affichage est par exemple un écran à cristaux liquides (LCD), un écran à diodes électroluminescentes (LED), un écran à diodes électroluminescentes organiques (OLED). L'écran peut comporter un verre Gorilla Glass (marque déposée) ou Willow Glass (marque de commerce). D'autres technologies d'affichage peuvent bien entendu être utilisées.

L'appareil mobile comporte de préférence une interface d'acquisition agencée pour permettre à l'utilisateur d'entrer des données pouvant être utilisées par l'application mobile. Cette interface d'acquisition forme un périphérique d'entrée pour le module électronique. Il peut s'agir d'un ou plusieurs interrupteurs, par exemple des boutons poussoirs, ou d'un clavier. L'interface d'acquisition peut aussi être formée en prévoyant un écran d'affichage tactile.

Selon une caractéristique préférée de réalisation, l'appareil mobile selon l'invention est réalisé de manière à limiter au maximum le changement d'aspect de l'objet de valeur qu'il vient équiper. L'appareil mobile peut être conçu de manière à laisser visible au maximum l'objet de valeur qu'il vient équiper. Les différents composants de l'appareil mobile peuvent présenter des dimensions réduites et/ou être réalisés avec des matériaux transparents. En particulier, le support de fixation peut être réalisé dans un matériau transparent, par exemple en céramique transparente, en plastique transparent, en Gorilla (marque déposée) Glass ou en Willow (marque commerciale) Glass. L'appareil mobile peut présenter une forme sensiblement similaire à la forme de l'objet de valeur à équiper avec des dimensions sensiblement supérieures à celles de l'objet de valeur ou de la partie à équiper, de préférence par superposition. L'appareil mobile peut ainsi protéger l'objet de valeur ou une partie contre les risques de détériorations, en fonction des lieux et du changement d'activité du porteur. Selon une forme particulière de réalisation, le support de fixation présente des formes et des dimensions agencées pour que l'appareil mobile puisse équiper successivement différents objets portés par l'être humain, et pour pouvoir fixer, de manière amovible et par superposition, au moins l'écran d'affichage à l'objet considéré. En pratique, le support de fixation peut présenter des dimensions sensiblement supérieures à celles des objets qu'il vient équiper. Il est à noter que le support de fixation peut être adapté pour équiper des objets dont les dimensions diffèrent sensiblement d'un objet à l'autre. Pour ce faire, le support de fixation peut présenter des dimensions dont chacune est au moins égale à la plus grande dimension respective des différents objets à équiper. Le support de fixation peut, en plus ou à la place, présenter une certaine élasticité.

L'appareil mobile peut aussi comporter des moyens pour communiquer des données avec d'autres équipements électroniques, notamment d'autres appareils mobiles tels qu'un téléphone portable. Ces moyens peuvent être des moyens de communication sans fil. À titre d'exemple, l'appareil mobile peut comporter un émetteur-récepteur basé sur la technologie Bluetooth (norme IEEE 802.15.1) ou Wi-Fi (norme IEEE 802.11). L'appareil mobile selon l'invention peut alors échanger des données avec d'autres équipements électroniques, notamment pour les commander et/ou pour afficher sur l'écran d'affichage des informations contenues et/ou traitées par ces équipements électroniques. En l'occurrence, les moyens de communication sans fil peuvent permettre de synchroniser des données avec un ou plusieurs équipements électroniques. L'appareil mobile peut également constituer un terminal informatique d'un réseau informatique, notamment dans l'informatique en nuage (ou "cloud computing" en anglais).

Selon une forme particulière de réalisation, l'appareil mobile comprend également des moyens de génération et/ou de stockage de données sécurisées. Les données sécurisées peuvent être des données relatives au porteur de l'objet de valeur, par exemple des informations sur son état de santé (passeport médical), des informations bancaires, et/ou des codes d'accès à des bâtiments, des chambres d'hôtels, ou des véhicules. Les moyens de génération et/ou de stockage de données sécurisées peuvent consister en un algorithme de cryptage de données, ou en une mémoire de stockage. La mémoire peut notamment être agencée pour empêcher une lecture des données stockées sans autorisation de l'utilisateur. La mémoire peut notamment être inaccessible en lecture par un dispositif autre que l'appareil mobile. Les données stockées peuvent être cryptées.

L'appareil mobile selon l'invention est particulièrement adapté à un objet de valeur comprenant un boîtier, par exemple une montre ou un bracelet santé. L'appareil mobile peut alors se fixer au boîtier. Par boîtier, on entend tout contenant apte à renfermer des éléments. Le boîtier peut présenter des formes générales diverses, notamment cylindriques ou parallélépipédiques. Il comporte une première surface extérieure destinée à être vue aisément par l'être vivant lorsqu'il porte l'objet de valeur. Pour une montre, la première surface extérieure correspond à la surface sur laquelle est formé le cadran indiquant l'heure. Pour une montre-bracelet, cette surface est opposée à la surface venant au contact du poignet de l'utilisateur. La première surface extérieure, et notamment le cadran, peuvent être ou non recouverts d'un verre de protection. La première surface extérieure et le cadran peuvent présenter une surface plane ou courbe. L'appareil mobile est adapté à la forme du boîtier. En particulier, il peut être agencé de manière à ce que, lorsque l'écran d'affichage est fixé à l'objet de valeur, il couvre au moins une partie de la première surface extérieure du boîtier. De préférence, le support de fixation est agencé pour pouvoir fixer l'écran d'affichage au boîtier. Selon d'autres formes de réalisation, l'appareil mobile peut être agencé pour couvrir d'autres parties d'un objet de valeur, notamment un bracelet.

Afin de faciliter l'utilisation de l'appareil mobile, celui-ci peut être agencé de manière à ce que, lorsque l'écran d'affichage est fixé à l'objet de valeur, il couvre au moins une partie de la première surface extérieure du boîtier. Il peut notamment couvrir une moitié supérieure ou inférieure de cette première surface, ou l'ensemble de cette première surface. L'utilisateur ou le porteur de l'objet de valeur accède ainsi intuitivement aux informations relatives à l'application mobile. Il est à noter que, dans le cas d'une montre, lorsque la première surface extérieure de la montre est recouverte d'un verre de protection, l'écran d'affichage vient sur ce verre de protection.

Toujours dans le but de limiter le changement d'aspect de l'objet de valeur équipé de l'appareil mobile, l'écran d'affichage, couvrant au moins une partie de la première surface extérieure du boîtier, est agencé de manière à laisser visible cette première surface extérieure en l'absence d'information affichée sur l'écran d'affichage. Autrement dit, l'écran d'affichage est apte à prendre un état dans lequel il apparaît transparent à l'utilisateur de la montre. Bien entendu l'écran peut être partiellement opaque, notamment sur ses bords où est disposée l'électronique de commande. De préférence, l'écran présente, sur au moins 80% de sa surface, correspondant à sa surface d'affichage, un coefficient de transmission supérieur ou égale à 50% (avantageusement supérieur ou égale à 75%) dans la bande de longueurs d'ondes visibles par l'être vivant portant l'objet de valeur (entre environ 380 nm et environ 780 nm pour un être humain).

Selon une autre particularité de l'invention, l'appareil mobile peut former un dispositif de protection de l'objet de valeur qu'il équipe, tout en autorisant une transparence totale ou partielle sur celui-ci, et assurant ainsi une belle apparence esthétique de l'ensemble appareil mobile - objet de valeur. L'appareil mobile peut recouvrir tout ou partie de l'objet de valeur, notamment tout ou partie du boîtier d'une montre, ce dernier élément étant une pièce unique non remplaçable car non détaillé en pièce détachée par les manufacturiers de montres de luxe. Il protège alors l'objet de valeur des chocs et des frottements contre d'autres objets. Il peut aussi être prévu pour protéger l'objet de valeur du rayonnement ultraviolet. L'appareil mobile peut également former un compartiment étanche à certains fluides, notamment l'eau et le sable.

Plus particulièrement, le support de fixation peut comporter une partie, appelée couvercle, agencée de manière à ce que, lorsque l'écran d'affichage est fixé à l'objet de valeur, cette partie couvre au moins une partie de la première surface extérieure du boîtier.

L'écran d'affichage, couvrant au moins une partie de la première surface extérieure, peut alors former tout ou partie du couvercle du support de fixation.

Le boîtier de l'objet de valeur peut comporter une deuxième surface extérieure formant un fond du boîtier. Pour une montre-bracelet, le fond correspond à la surface venant au contact du poignet de l'utilisateur.

Selon une forme particulière de réalisation, le support de fixation comporte une autre partie, appelée fond support, agencée de manière à ce que lorsque le support de fixation est fixé à l'objet de valeur, le fond support couvre au moins une partie du fond du boîtier. Le couvercle et le fond support définissent alors entre eux un compartiment de protection apte à accueillir le boîtier. Ce compartiment peut envelopper l'ensemble du boîtier, ou seulement une partie. Ainsi, le support de fixation présente une forme sensiblement similaire ou complémentaire à la forme du boîtier ou une partie à protéger de celui-ci, et des dimensions sensiblement supérieures à celles du boîtier ou de la partie à protéger.

Le support de fixation peut comporter, en outre, un flanc latéral reliant mécaniquement le couvercle et le fond support, de sorte à former un U. Le couvercle forme une première branche du U, le fond une deuxième branche du U, et le flanc latéral une partie reliant les deux branches du U. L'appareil mobile peut ainsi venir s'accoupler au boîtier par glissement, alors que l'objet de valeur est en place sur l'utilisateur. Avantageusement, le fond du support de fixation présente une épaisseur relativement faible, par exemple inférieure ou égale à 2 mm, afin de pouvoir venir entre le fond du boîtier de la montre et le poignet de l'utilisateur sans avoir à desserrer le bracelet de la montre.

Dans le but de renforcer la protection de la montre, le support de fixation peut aussi comporter un capot latéral de fermeture apte à prendre une première position, dite ouverte, dans laquelle le support de fixation peut venir se mettre en place sur le boîtier par glissement, et une deuxième position, dite fermée, dans laquelle le capot latéral de fermeture ferme une portion ouverte du U. Autrement dit, dans la position fermée, le support de fixation forme un contour fermé en O.

Dans une autre version du dispositif selon l'invention, le couvercle peut être monté sur le fond support par une charnière, une glissière en « T », « U », ou « L » ou tout autre moyen adéquat. De même, le capot latéral peut être monté sur le couvercle par une charnière, une glissière en « T », « U », ou « L » ou tout autre moyen adéquat.

L'appareil mobile peut comporter des moyens d'alimentation autonomes, c'est-à-dire indépendants de l'objet de valeur équipé de l'appareil mobile. Les moyens d'alimentation peuvent être intégrés dans un même étui que le module électronique et les autres composants de l'appareil mobile, ou être déportés en totalité ou en partie. À titre d'exemple, les moyens d'alimentation peuvent être agencés pour être fixés sur le bracelet de l'objet de valeur. Les moyens d'alimentation peuvent comporter une pile ou une batterie. Ils peuvent aussi comporter un capteur d'énergie solaire ou un capteur d'ondes infrarouges. Les moyens d'alimentation peuvent aussi comprendre des moyens pour générer de l'énergie électrique par un mouvement, par des moyens de recharge par induction, par rétrodiffusion ambiante, ou par des moyens pour récupérer l'énergie électrique et/ou mécanique du mécanisme de la montre équipée de l'appareil mobile. La rétrodiffusion ambiante est une nouvelle technologie qui permet d'utiliser l'énergie contenue dans les ondes environnantes présentes autour d'un objet pour générer des applications consommatrices d'énergie.

Selon une première variante de réalisation de l'invention, le module électronique n'est pas intégré dans le boîtier de l'objet de valeur, par exemple dans le boîtier de la montre. Il peut notamment être intégré dans le fond support du support de fixation. Il n'est dans ce cas pas visible par l'utilisateur lorsque l'appareil mobile est en place sur l'objet de valeur. Le module électronique pourrait également être déporté sur une autre partie de l'objet de valeur, par exemple sur le bracelet. De même, d'autres composants de l'appareil mobile peuvent être intégrés dans le fond support ou dans le couvercle du support de fixation.

Selon une deuxième variante de réalisation de l'invention, le module électronique est agencé pour être intégré dans le boîtier de l'objet de valeur. Le boîtier est dans ce cas agencé pour accueillir le module électronique. En l'occurrence, il comporte un logement formé dans le boîtier pour accueillir le module électronique. De préférence, ce logement est facilement accessible afin de permettre une insertion et un retrait aisés du module électronique. Le module électronique peut alors être facilement remplacé, par exemple par une version plus récente.

Selon cette deuxième variante de réalisation de l'invention et dans un mode particulier de réalisation, l'écran d'affichage peut être confondu avec le verre de protection qui est fixé sur le boîtier de montre.

Selon une forme particulière de réalisation, le support de fixation est agencé pour recevoir un bracelet permettant d'attacher l'appareil mobile au poignet sans avoir à porter de montre. Le bracelet peut notamment être attaché au fond support du support de fixation. Cette forme particulière de réalisation permet de disposer le moyen d'alimentation autonome en lieu et place de l'emplacement initialement réservé au boîtier de la montre.

Il est à remarquer que l'appareil mobile selon l'invention, bien qu'il vienne se greffer sur un objet existant, présente toutes les caractéristiques pour fonctionner de manière autonome, indépendamment de cet objet. En l'occurrence, il comporte les moyens permettant de fournir une application mobile à un utilisateur (module électronique, écran d'affichage), sans utiliser de ressources matérielles et/ou logicielles de cet objet. Par ailleurs, l'appareil mobile est agencé pour venir se greffer à différents objets déjà existants, à fabrications commercialisées ou non, sans que ces objets n'aient été conçus pour accueillir le dispositif mobile. En particulier, les formes et les dimensions du support de fixation peuvent être agencées pour permettre la fixation à un objet existant. Ainsi, l'appareil mobile ne constitue pas un module dédié à un certain objet, mais un appareil générique pouvant se greffer à des objets dont les formes et les dimensions diffèrent ou plus généralement, une incrémentation d'appareils génériques standardisés pouvant se greffer à une gamme d'objets de formes et de dimensions variées.

L'appareil mobile peut être associé à une plateforme interactive. La plateforme interactive, prenant la forme générale d'une plaque, est apte à se fixer de manière amovible à l'appareil mobile. Elle comprend par exemple des moyens d'accouplement élastique avec le fond support du support de fixation. La plateforme interactive peut comporter tout moyen de communication et d'information. À titre d'exemple, elle peut comporter une carte SIM ou un logement pour une carte SIM, une étiquette de communication en champ proche (tag NFC), une étiquette d'identification par radiofréquence (puce RFID), un code à barres monodimensionnel ou bidimensionnel (flashcode ou QR code). Ces moyens de communication et d'information peuvent notamment être utilisés comme supports de données confidentielles, ou comme clefs d'accès à des systèmes ou des lieux sécurisés.

L'invention a également pour objet un ensemble comprenant une montre et un appareil mobile tel que décrit précédemment. La montre peut comporter un boîtier dans lequel est formé un logement apte à accueillir le module électronique.

L'invention a encore pour objet un ensemble comprenant un appareil mobile et une plateforme interactive tels que décrits précédemment. L'ensemble est agencé pour pouvoir fixer de manière amovible la plateforme interactive à l'appareil mobile. En l'occurrence, la plateforme interactive peut comporter des moyens d'accouplement élastique avec l'appareil mobile. La plateforme interactive comprend au moins un moyen de communication et d'information. Il peut notamment s'agir d'une carte SIM ou d'un logement pour une carte SIM, d'une étiquette de communication en champ proche, d'une étiquette d'identification par radiofréquence, ou d'un code à barres monodimensionnel ou bidimensionnel.

L'invention a également pour objet un coffre de protection interactif apte à protéger des objets, notamment des objets de valeur, nomades de préférence, et apte à être porté par un être vivant. Le coffre de protection interactif comprend notamment un boîtier destiné à accueillir des objets de valeur, et des moyens de communication et d'information aptes à afficher des informations à un utilisateur et/ou à échanger des données avec un autre dispositif électronique, par exemple avec l'appareil mobile décrit ci-dessus. Plus précisément, le coffre de protection interactif selon l'invention comprend :
▪ un boîtier comportant un compartiment apte à accueillir un ou plusieurs objets à protéger,
▪ un écran d'affichage apte à afficher des informations, et
▪ des moyens de traitement aptes à générer des données relatives aux informations à afficher.

Le boîtier est dimensionné de manière à pouvoir contenir au moins un objet de valeur, tel qu'une montre, équipée ou non de l'appareil mobile décrit précédemment, une clef d'un véhicule automobile, une carte de crédit, un téléphone portable, un portefeuille, des bijoux, ou un dispositif de stockage externe type clef USB. De préférence, il est dimensionné de manière à pouvoir stocker plusieurs objets de valeur, tout en restant facilement transportable par une personne.

Le boîtier comporte par exemple une première partie, appelée corps, et une deuxième partie, appelée couvercle, ces deux parties définissant le compartiment apte à accueillir les objets de valeur. Le boîtier peut se présenter sous la forme d'un étui de ceinture ou d'une boucle de ceinture. Il est alors destiné à être porté autour de la taille d'une personne.

Le boîtier peut aussi comporter des moyens de fermeture permettant au boîtier de passer de la position ouverte à la position fermée, et inversement. Dans la position ouverte, il est possible de disposer les objets de valeur dans le compartiment ; dans la position fermée, le compartiment renferme les objets de valeur et les protège de l'environnement extérieur, notamment des chocs et des frottements, ainsi que des risques de perte et de convoitise.

Selon une forme particulière de réalisation, les moyens de fermeture comportent une charnière formée entre le corps et le couvercle pour permettre le passage de la position ouverte à la position fermée, et inversement, par un mouvement de rotation entre le corps et le couvercle.

Selon une autre forme particulière de réalisation, les moyens de fermeture forment une liaison glissière entre le corps et le couvercle. À titre d'exemple, le corps peut comporter une ou plusieurs rainures, par exemple en forme de U, de L ou de T, et le couvercle peut comporter une pièce mâle de forme complémentaire à la rainure, de manière à permettre le glissement relatif du couvercle sur le corps. La pièce mâle peut venir de matière avec le couvercle. Elle peut également correspondre au bord périphérique du couvercle.

Le boîtier peut aussi comporter des moyens d'étanchéité assurant une étanchéité entre le compartiment et l'environnement extérieur dans la position fermée. Ainsi, les objets renfermés dans le boîtier sont protégés contre toute intrusion d'éléments extérieurs tels que le sable, l'eau et la poussière. Les moyens d'étanchéité peuvent notamment comporter un joint disposé entre le corps et le couvercle, le boîtier étant agencé de sorte que le joint est comprimé dans la position fermée du boîtier.

Afin de sécuriser le boîtier dans la position fermée, le coffre de protection interactif peut comporter des moyens de verrouillage aptes à maintenir le boîtier dans la position fermée. En particulier, les moyens de verrouillage peuvent comporter un ensemble vis-écrou agencé de manière à solidariser le corps avec le couvercle dans la position fermée. Dans un premier exemple de réalisation, les moyens de verrouillage peuvent comprendre un élément fileté prévu pour traverser le couvercle et être vissé dans une ouverture taraudée aménagée sur le corps, de sorte que le serrage de l'élément fileté serre le couvercle contre le corps du boîtier. Dans un deuxième exemple de réalisation, les moyens de verrouillage peuvent comprendre un élément fileté et un écrou. L'élément fileté est prévu pour traverser à la fois le couvercle et le corps, et coopère avec l'écrou de sorte que le vissage de l'élément fileté sur l'écrou serre le couvercle contre le corps du boîtier. Ces moyens de verrouillage assurent une fermeture par serrure ; ils peuvent comporter une clef empreinte, une clef mécanique ou électronique.

Dans le but de permettre le transport sécurisé du coffre de protection interactif selon l'invention, le boîtier comporte avantageusement des moyens d'attache externes. Ces moyens d'attache externes permettent d'attacher le coffre de protection à une partie du corps de l'être vivant. Ils peuvent notamment comprendre une ou plusieurs formes prévues pour être fixées sur une ceinture ou accueillir une ceinture, une chaîne, ou tout moyen réalisant une boucle autour d'une partie du corps d'une personne, telle que la taille, le bras, le cou ou la jambe. Par exemple, les moyens d'attache externes peuvent comprendre des passants pour accueillir une ceinture.

Dans le but de permettre le stockage sécurisé du coffre, le boîtier peut par ailleurs comporter des moyens de solidarisation. Ces moyens de solidarisation sont prévus pour attacher le coffre à un socle d'accueil sécurisé, le socle d'accueil pouvant notamment être fixé à un mur, ou à une paroi interne d'un coffre-fort ou d'un véhicule. Les moyens de solidarisation peuvent comporter toute forme de solidarisation apte à coopérer avec une forme, dite d'accroché, du socle d'accueil, pour solidariser le boîtier avec le socle d'accueil.

Dans un exemple de réalisation non limitatif, la forme de solidarisation et la forme d'accroché peuvent former une glissière. La glissière peut comporter une rainure formée sur le boîtier ou le socle d'accueil, et une pièce mâle formée respectivement sur le socle d'accueil ou le boîtier et venant coulisser dans la rainure.

Dans un exemple de réalisation avantageux, la forme de solidarisation s'effectue sur une unique paroi externe de la partie de corps ou de la partie couvercle du coffre de protection.

Dans un exemple de réalisation avantageux, les moyens de solidarisation correspondent aux moyens d'attache externes. La forme du boîtier peut ainsi être simplifiée.

Selon une particularité importante de l'invention, le coffre de protection interactif comprend des moyens de communication et d'information aptes à afficher des informations à un utilisateur et/ou à échanger des données avec un autre dispositif électronique. En particulier, le coffre de protection comporte un écran d'affichage apte à afficher des informations à un utilisateur, notamment le porteur du coffre de protection. L'écran d'affichage est formé sur une face externe du boîtier, par exemple sur le couvercle, afin d'être visualisable par le porteur du coffre de protection interactif lorsqu'il est attaché à sa ceinture.

L'écran d'affichage peut être un écran à cristaux liquides (LCD), un écran à diodes électroluminescentes (LED), un écran à diodes électroluminescentes organiques (OLED). Il peut comporter un verre Gorilla Glass (marque déposée) ou Willow Glass (marque de commerce). D'autres technologies d'affichage peuvent bien entendu être utilisées.

L'écran d'affichage peut être tactile, afin de former une unique interface pour entrer des données et afficher des informations. Le coffre de protection interactif peut aussi comporter une interface d'acquisition indépendante de l'écran d'affichage, afin de permettre à l'utilisateur d'entrer des données.

Le coffre de protection interactif comporte également des moyens de traitement aptes à générer des données relatives aux informations à afficher. Les moyens de traitement peuvent être basés sur une architecture purement matérielle, purement logicielle, ou sur une combinaison des deux. En l'occurrence, ils peuvent comporter un circuit électronique, par exemple un réseau prédiffusé programmable par l'utilisateur (FPGA), un processeur ou un microprocesseur. Ils peuvent aussi comporter des moyens de stockage de données, notamment le logiciel à exécuter.

Selon une forme particulière de réalisation, le coffre de protection interactif comprend de plus des moyens de communication sans fil permettant de communiquer des données avec d'autres équipements électroniques. Les moyens de communication sans fil peuvent comporter un émetteur-récepteur, par exemple basé sur la technologie Bluetooth (norme IEEE 802.15.1) ou Wi-Fi (norme IEEE 802.11). Le coffre de protection peut ainsi afficher des informations relatives aux autres équipements électroniques, ou commander ces équipements électroniques. En particulier, le coffre de protection interactif peut échanger des données avec les équipements électroniques qu'il renferme, de manière à former une interface à distance de ces équipements électroniques. Il est alors possible de protéger les équipements électroniques tout en ayant accès à leurs fonctionnalités. À titre d'exemple, le coffre de protection interactif peut permettre d'afficher et d'accéder à un calendrier électronique de l'utilisateur géré par un téléphone portable ou un assistant numérique personnel (PDA). Le coffre de protection peut également constituer un terminal informatique d'un réseau informatique, notamment dans l'informatique en nuage (ou "cloud computing" en anglais).

Toujours selon une forme particulière de réalisation, le coffre de protection interactif comprend des moyens de recharge permettant de recharger un ou plusieurs équipements électroniques disposés dans le compartiment du boîtier. Les moyens de recharge comportent notamment des premiers moyens de connexion pour connecter un ou plusieurs équipements électroniques à une source d'énergie électrique. Ces premiers moyens de connexion peuvent comporter des fils de connexion et des surfaces de contact aptes à assurer le contact avec des points d'alimentation d'un équipement électronique. Ils peuvent aussi comporter des connecteurs électriques aptes à venir se brancher dans des prises électriques des équipements électroniques disposés dans le compartiment du boîtier. Les premiers moyens de connexion peuvent aussi comporter un ou plusieurs dispositifs de transfert d'énergie sans contact, par exemple par induction. Chaque dispositif de couplage par induction peut permettre de recharger plusieurs équipements électroniques simultanément. La source d'énergie électrique peut être interne ou externe au coffre de protection interactif. Elle peut notamment comprend un accumulateur électrique tel qu'une pile ou une batterie, rechargeable ou non. Les moyens de recharge peuvent en outre comporter des deuxièmes moyens de connexion pour connecter la source d'énergie électrique à un dispositif extérieur, par exemple le socle d'accueil sur lequel peut être attaché le coffre de protection interactif.

Le coffre de protection interactif peut comporter un récepteur d'un système de positionnement par satellites, permettant de localiser le coffre de protection.

Selon une forme particulière de réalisation, le coffre de protection comporte un dispositif d'alarme. Le dispositif d'alarme comporte par exemple des moyens pour contrôler l'ouverture du boîtier, et/ou des moyens pour signaler une ouverture non autorisée. Les moyens pour contrôler l'ouverture du boîtier peuvent comporter des moyens d'autorisation d'accès à code ou à carte. L'écran d'affichage peut être utilisé pour entrer un code d'accès. Les moyens pour signaler une ouverture non autorisée peuvent comprendre une alarme sonore ou visuelle. Ils peuvent aussi comporter des moyens pour signaler l'ouverture non autorisée à un dispositif extérieur, par exemple un téléphone portable. Le signalement peut être accompagné de données relatives à la position du coffre de protection déterminée par le récepteur du système de positionnement par satellites.

Le coffre de protection interactif permet ainsi plusieurs types d'utilisation en fonction des besoins de l'utilisateur et du niveau de protection souhaité :
- Un premier niveau de protection est apporté par les moyens de traitement et les moyens de communication sans fil avec les équipements électroniques portés par l'utilisateur du coffre de protection.
- Un deuxième niveau de protection est apporté par le compartiment du boîtier renfermant les objets de valeur, le coffre de protection étant porté à la main ou autour de la taille de l'utilisateur.
- Un troisième niveau de protection est apporté en disposant une chaîne reliant le coffre de protection au poignet ou à la taille de l'utilisateur.
- Un quatrième niveau de protection est apporté en fixant le coffre de protection interactif sur un socle d'accueil sécurisé. Des socles d'accueil peuvent être installés sur différents sites.
- Un cinquième niveau de protection est apporté par un capteur anti-intrusion et un système de positionnement par satellites.

L'invention a aussi pour objet un socle d'accueil pour le coffre de protection interactif décrit ci-dessus. En particulier, le socle d'accueil comprend :
▪ une forme d'accroché coopérant avec la forme de solidarisation du boîtier pour positionner le coffre de protection interactif sur le socle d'accueil dans une position dite d'assemblage, et
▪ des moyens de blocage agencés pour bloquer le coffre de protection interactif sur le socle d'accueil dans la position d'assemblage.

La forme d'accroché se présente par exemple sous la forme d'une ou plusieurs pattes agencées pour venir s'insérer dans la forme de solidarisation du boîtier du coffre de protection, par exemple dans ses passants. La forme d'accroche et la forme de solidarisation forment alors une liaison glissière entre le coffre de protection interactif et le socle d'accueil.

Les moyens de blocage sont agencés pour bloquer le coffre de protection interactif sur le socle d'accueil. Autrement dit, ils sont agencés pour supprimer tout degré de liberté résiduel entre le coffre de protection et le socle d'accueil. Dans le cas d'une liaison glissière, les moyens de blocage suppriment le degré de liberté en translation selon l'axe de la liaison glissière. Dans un exemple de réalisation, les moyens de blocage comprennent une pièce de butée et un élément de fixation. L'élément de fixation est agencé pour solidariser de manière amovible la pièce de butée avec la forme d'accroché. L'élément de fixation peut comporter une vis de sécurité, c'est-à-dire une vis dont l'empreinte formée sur sa tête présente une forme non conventionnelle. La pièce de butée peut notamment comporter une surface d'appui venant en contact avec une surface du boîtier pour empêcher le déplacement du boîtier par rapport au socle d'accueil. Ces moyens de blocage assurent une fermeture par serrure.

Plus généralement, les moyens de blocage peuvent être du même type que les moyens de verrouillage du boîtier de protection interactif. Ils peuvent comporter une clef empreinte, une clef mécanique ou électronique.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente, dans une vue de trois-quarts, un premier exemple d'appareil mobile selon l'invention dans une position fermée ;
- la figure 2 représente, dans une vue de côté, l'appareil mobile de la figure 1 dans une position ouverte ;
- la figure 3 représente, dans une vue de trois-quarts, l'appareil mobile des figures 1 et 2 dans la position ouverte ;
- la figure 4A représente, dans une vue de trois-quarts, un capot latéral de fermeture de l'appareil mobile des figures 1 à 3 ;
- la figure 4B représente, dans une vue de trois-quarts, une partie d'un support de fixation de l'appareil mobile des figures 1 à 3 ;
- la figure 5 représente l'appareil mobile des figures 1 à 4 équipant une montre-bracelet ;
- la figure 6 représente une plateforme interactive apte à équiper l'appareil mobile des figures 1 à 5 ;
- la figure 7 représente un deuxième exemple d'appareil mobile selon l'invention ;
- la figure 8 représente, sous forme d'un schéma bloc, un exemple d'appareil mobile selon l'invention ;
- la figure 9 représente un troisième exemple de réalisation d'un appareil mobile selon l'invention ;
- la figure 10 représente un exemple de coffre de protection interactif selon l'invention dans une position ouverte ;
- la figure 11 représente le coffre de protection interactif de la figure 10 avec des objets de valeur disposés à l'intérieur ;
- les figures 12 et 13 représentent, dans deux vues différentes, le coffre de protection des figures 10 et 11 dans une position fermée ;
- la figure 14 représente, sous forme d'un schéma bloc, un exemple de moyens de communication et d'information du coffre de protection interactif selon l'invention ;
- les figures 15 et 16 représentent, dans deux vues différentes, un exemple de socle d'accueil selon l'invention sur lequel peut le coffre de protection interactif peut être solidarisé.

### Description de modes de réalisation

Les modes de réalisation décrits ci-après étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans la suite de la description, l'appareil mobile selon l'invention est considéré comme étant adapté à équiper une montre, et plus particulièrement un boîtier d'une montre-bracelet. Néanmoins, l'appareil mobile peut équiper tout type de boîtier, par exemple le boîtier d'un bracelet santé, d'une montre intelligente ou d'un chronomètre. Plus généralement, il peut équiper tout objet, notamment tout objet de valeur, de manière autonome et générique. Les supports de fixation ci-après décrits dans les figures permettent de greffer, successivement, au moins l'écran d'affichage de l'appareil mobile générique à différents objets portés par l'être humain.

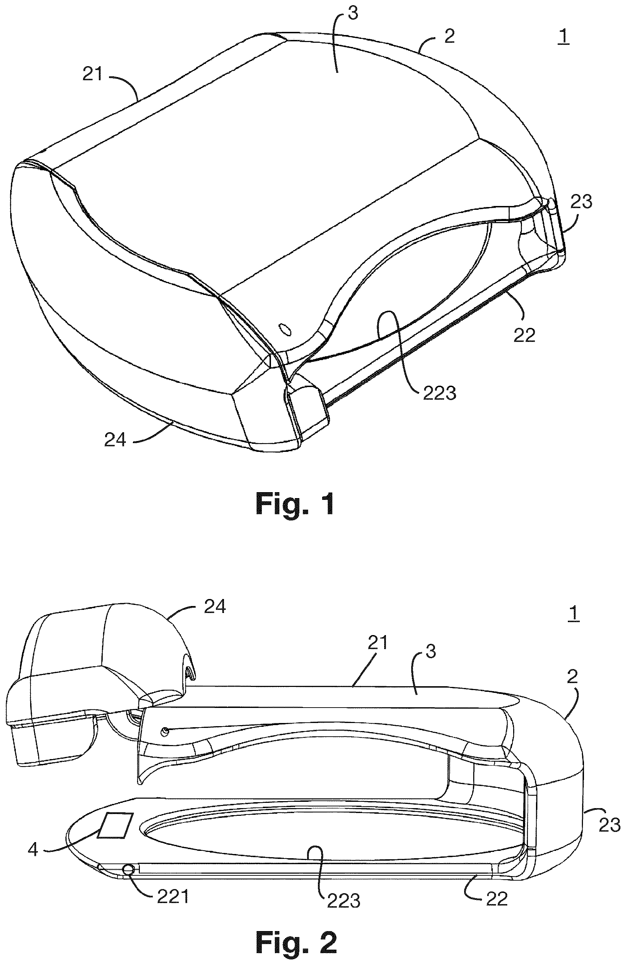

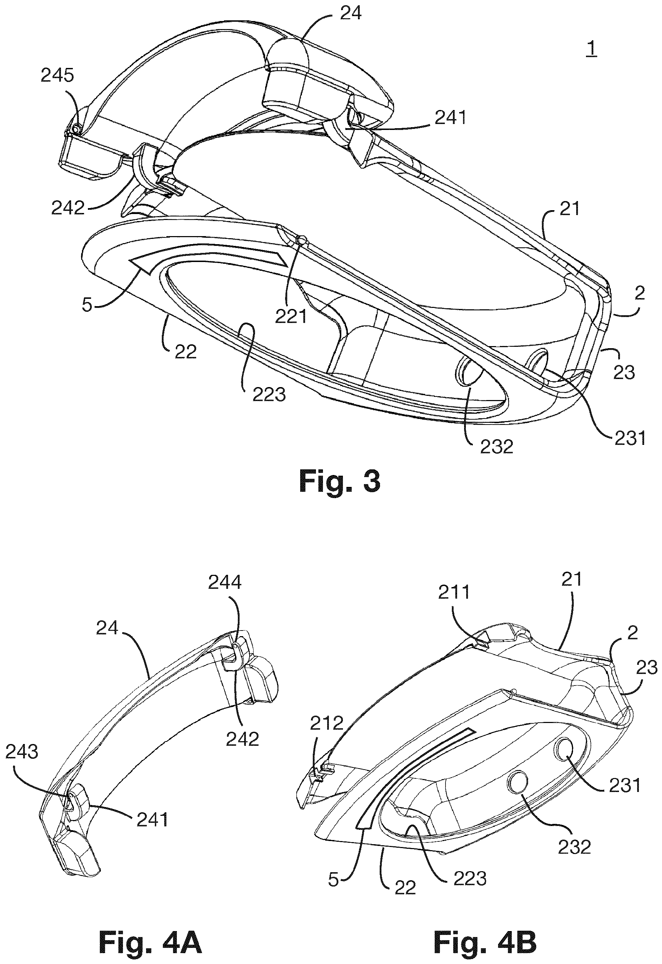

Les figures 1 à 4 représentent, dans quatre vues différentes, un premier exemple d'appareil mobile selon l'invention. La figure 1 représente, dans une vue de trois-quarts, l'appareil mobile dans une position dite fermée. Les figures 2 et 3 représentent, dans une vue de côté et une vue de trois-quarts, l'appareil mobile dans une position dite ouverte. La figure 4A représente, dans une vue de trois-quarts selon un premier point de vue, un capot latéral de fermeture de l'appareil mobile. La figure 4B représente, dans une vue de trois-quarts selon un deuxième point de vue, une partie d'un support de fixation de l'appareil mobile. L'appareil mobile 1 comporte un support de fixation 2, un écran d'affichage 3, un module électronique 4, représenté sur la figure 2, et des moyens d'alimentation 5, représentés sur les figures 3 et 4B. Le support de fixation 2 comporte une première partie formant un couvercle 21, une deuxième partie formant un fond 22, et une troisième partie, appelée flanc latéral 23 reliant le couvercle 21 au fond 22, de manière à former un profil en U. Ce profil est adapté à venir entourer un boîtier d'une montre, comme expliqué plus loin. Le support de fixation 2 peut en outre recouvrir tout ou partie des cornes du boîtier de la montre. De préférence, le couvercle 21, le fond 22 et le flanc latéral 23 sont formés d'un seul bloc, par exemple par moulage ou impression tridimensionnelle. Le support de fixation 2 peut aussi comporter un capot latéral de fermeture 24 apte à prendre une position fermée, comme représenté sur la figure 1, et une position ouverte, comme représenté sur les figures 2 et 3. Dans la position fermée, le support de fixation 2 présente un profil en O. Le changement de position est réalisé en prévoyant un mécanisme de charnière. Le capot latéral de fermeture 24 comporte deux pattes 241, 242 présentant des premiers évidements 243, 244 s'étendant selon un axe de rotation, et le couvercle 21 comporte des deuxièmes évidements 211, 212. Des broches viennent se loger dans les évidements 243 et 211 d'une part, et 244 et 212 d'autre part, de manière à former une liaison pivot. Bien entendu, tout autre mécanisme peut être prévu pour faire passer le capot latéral de fermeture 24 de la position ouverte à la position fermée. Le mécanisme de charnière peut être agencé de manière à empêcher un changement de la position du capot latéral de fermeture 24 sous l'effet de la gravité ou d'un frottement contre un objet. En l'occurrence, le matériau des pattes 241, 242, et celui du couvercle 21 peuvent être choisis en fonction de leur coefficient de frottement. Les pattes 241, 242 et les broches peuvent aussi être ajustées serrées dans les évidements 211, 212, et 243, 244.

Selon une forme particulière de réalisation, le support de fixation 2 comporte, en outre, des moyens de verrouillage de la position du capot latéral de fermeture 24. Ces moyens de verrouillage, peuvent empêcher toute ouverture accidentelle du capot latéral de fermeture 24. Ils consistent par exemple en un mécanisme apte à se libérer par déformation ou déplacement d'un organe d'accroché, tels que anneaux élastiques. Ils peuvent également consister en des ergots, vis, écrous, rainures, arrêtoirs, ou tout autre moyen adéquat. Dans l'exemple de réalisation des figures 1 à 4, les moyens de verrouillage comportent des tétons 221 formés sur le fond 22, et des troisièmes évidements 245 formés sur le capot latéral de fermeture 24. Les tétons 221 viennent chacun coopérer avec un évidement 245 dans la position fermée afin de maintenir cette position.

Le support de fixation 2 peut comporter, comme représenté sur les figures 3 et 4, des trous débouchants 231, 232 formés sur le flanc latéral 23 pour le passage d'une chaîne. La chaîne peut assurer un moyen d'attache supplémentaire de l'appareil mobile au poignet du porteur de la montre. Elle forme alors un moyen de sécurisation de la montre et de l'appareil mobile. La chaîne peut aussi permettre à un utilisateur de porter l'appareil mobile autour du cou. Bien entendu, l'appareil mobile pourrait comporter tout autre moyen d'attache en plus du support de fixation 2, tel que par exemple un bracelet autonome.

Dans le cas où l'appareil mobile équipe une montre-bracelet, le fond 22 du support de fixation 2 est agencé pour pouvoir se loger entre le fond du boîtier de la montre, et un poignet du porteur de la montre. Le fond 22 peut présenter une épaisseur relativement faible, par exemple inférieure ou égale à 2 millimètres (mm). Le support de fixation 2 peut alors venir s'enchâsser autour du boîtier de la montre alors que celle-ci est déjà en place sur le poignet de l'utilisateur.

Dans le but de diminuer encore l'épaisseur du fond 22, ce dernier peut comporter un évidement 223, débouchant ou non, dans lequel vient s'insérer une partie du fond du boîtier de la montre.

Le support de fixation 2 est de préférence formé dans un matériau transparent, par exemple en plastique transparent, en silicone, en Gorilla (marque déposée) Glass, ou en céramique transparente. D'autres matériaux, transparents ou non, peuvent aussi être utilisés. Si tout le support de fixation 2 n'est pas réalisé dans un matériau transparent, il est préférable de réaliser au moins le couvercle 21 dans un matériau transparent, à moins de vouloir cacher entièrement l'objet de valeur de regards indiscrets.

Le support de fixation 2 forme un dispositif de protection de la montre sur laquelle il est fixé. En effet, sa forme en O forme un contour fermé et définit un compartiment de protection pour la montre. Les chocs et les rayures éventuels ne sont plus directement appliqués sur le boîtier de la montre, mais sur l'appareil mobile.

L'écran d'affichage 3 est par exemple intégré dans le couvercle 21. Le couvercle 21 peut comporter un trou débouchant dimensionné pour accueillir l'écran d'affichage 3, de sorte qu'il forme une partie du couvercle 21. L'écran d'affichage 3 peut aussi être disposé sur le couvercle 21, dans un alésage ou en surépaisseur du couvercle 21.

L'écran d'affichage 3 est avantageusement agencé pour laisser visible la surface qu'il recouvre, notamment, la première surface extérieure du boîtier contenant le cadran de la montre, en l'absence d'information affichée sur l'écran d'affichage 3. L'écran d'affichage 3 présente un coefficient de transmission supérieur ou égale à 50%, de préférence supérieur ou égale à 75% dans la bande de longueurs d'ondes visibles. Sur sa périphérie, l'écran d'affichage 3 peut présenter un coefficient de transmission inférieur à 50%, par exemple du fait de la présence de son électronique de commande. L'électronique de commande couvre cependant une surface inférieure à 20% de la surface totale de l'écran d'affichage 3. Lorsque l'appareil mobile n'est pas utilisé, l'utilisateur peut donc visualiser le boîtier de la montre sans être gêné. Dans le but de faciliter la lecture des informations affichées sur l'écran d'affichage 3, ce dernier peut aussi être agencé de manière à ce que, lorsqu'il affiche une ou plusieurs informations, le boîtier de la montre ne soit pas visible à travers l'écran d'affichage. Un tel mode d'affichage peut notamment être réalisé en faisant afficher un fond d'écran opaque.

Selon une forme particulière de réalisation, l'écran d'affichage 3 est tactile. Autrement dit, il comporte des moyens disposés sur l'écran d'affichage formant une interface d'acquisition pour l'utilisateur. Tout type de technologie d'écran tactile peut être utilisé, notamment les écrans tactiles résistifs et les écrans tactiles capacitifs. L'écran d'affichage 3 peut comporter un mécanisme de déverrouillage de l'interface d'acquisition, afin d'éviter toute saisie non intentionnelle. Le mécanisme de déverrouillage peut par exemple se présenter sous la forme d'un curseur à faire glisser entre deux points prédéterminés de l'écran d'affichage, ou le long d'un parcours prédéterminé.

Le module électronique 4 peut être intégré dans le fond 22 du support de fixation 2. Il peut également être disposé ailleurs que sur le support de fixation 2. À titre d'exemple, il peut être fixé au bracelet de la montre équipée de l'appareil mobile.

Le module électronique 4 doit être capable d'exécuter une ou plusieurs applications mobiles. Par application mobile, on entend tout logiciel informatique contenant une suite d'instructions accomplies en vue de remplir une fonctionnalité donnée. À titre d'exemple, l'application mobile peut consister en un jeu vidéo, un agenda électronique, ou un lecteur de musique numérique. Bien entendu, ces exemples d'applications ne sont pas limitatifs et bien d'autres applications peuvent être envisagées, en fonction des ressources de l'appareil mobile.

Le module électronique 4 comporte par exemple un réseau prédiffusé programmable (FPGA). Il peut aussi comporter une architecture logicielle ou partiellement logicielle. Le module électronique 4 peut alors consister en un processeur ou un microprocesseur associé à une mémoire, par exemple une mémoire flash. La mémoire contient la ou les applications mobiles, et le microprocesseur les exécute.

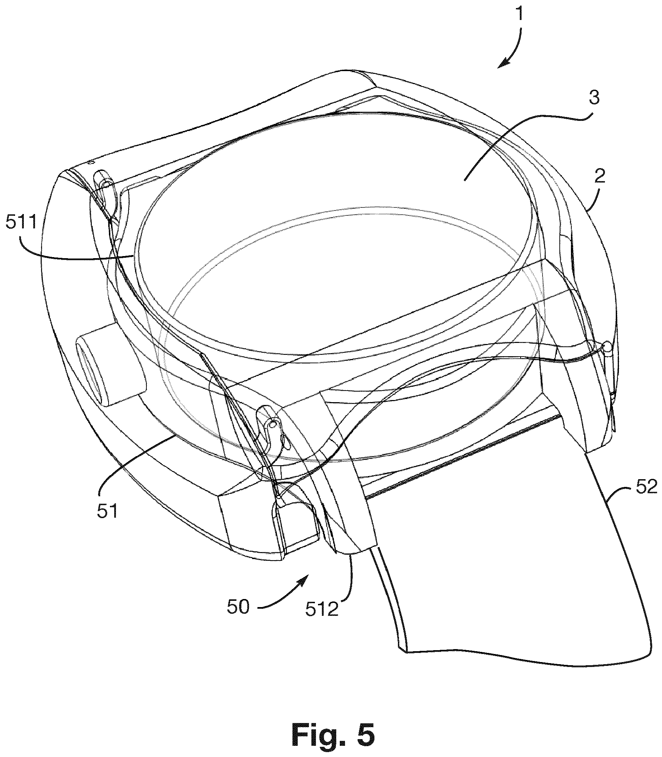

La figure 5 représente l'appareil mobile 1 décrit en référence aux figures 1 à 4 équipant une montre-bracelet. La montre bracelet 50 comporte un boîtier 51, et un bracelet 52. Le boîtier 51 présente une forme générale cylindrique. Il comporte une surface extérieure formant un cadran, un verre de protection 511 recouvrant le cadran, et des cornes de boîtier 512 auxquelles est fixé le bracelet 52.

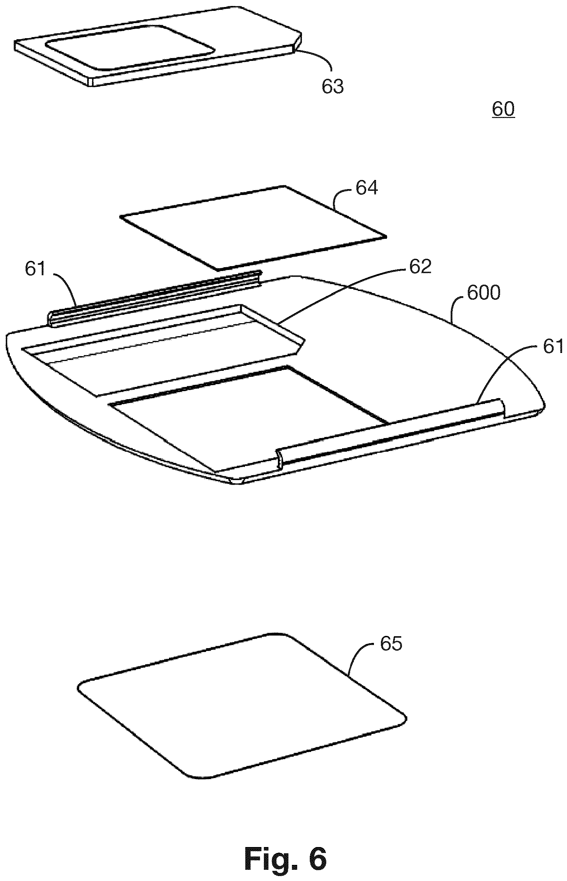

La figure 6 représente une plateforme interactive apte à équiper l'appareil mobile 1 décrit en référence aux figures 1 à 5. La plateforme interactive 60 prend par exemple la forme générale d'une plaque 600. La plaque est de préférence suffisamment fine, par exemple de l'ordre d'un millimètre, afin de pouvoir être positionnée entre le fond 22 du support 2 et le poignet d'un utilisateur. La plateforme interactive 60 comprend deux rebords périphériques d'accroché 61 apte à venir s'accoupler par déformation élastique au fond support 22 du support 2. Tout autre moyen de liaison pourrait être prévu sur l'appareil mobile 1 et/ou la plateforme interactive 60 pour permettre de fixer de manière amovible la plateforme interactive 60 au support 2. Il pourrait notamment s'agir d'une rainure formée dans le support 2, dans laquelle pourrait coulisser la plateforme interactive 60. Dans l'exemple de la figure 6, la plateforme interactive 60 comporte un logement 62 pour une carte SIM 63, une étiquette 64 de communication en champ proche (tag NFC), et un code à barres bidimensionnel 65 fixé ou imprimé sur la plaque 600 (par exemple un flashcode ou un QR code). La plateforme interactive 60 pourrait comporter d'autres moyens de communication et d'information, comme par exemple une étiquette d'identification par radiofréquence, mieux connue sous le terme de puce RFID, ou toute carte à puce sans contact. Du fait de sa localisation, la plateforme interactive 60, interchangeable, forme un support de données relativement sécurisé. En particulier, lorsque l'appareil mobile équipe une montre-bracelet portée par un utilisateur, la plateforme interactive 60 n'est pas visible. Elle permet ainsi de stocker des données sécurisées de l'utilisateur, par exemple des informations sur sa santé (passeport médical ou suivi de son état de santé), des informations bancaires et/ou des clés d'accès électroniques à des bâtiments, des chambres d'hôtels, ou des véhicules.

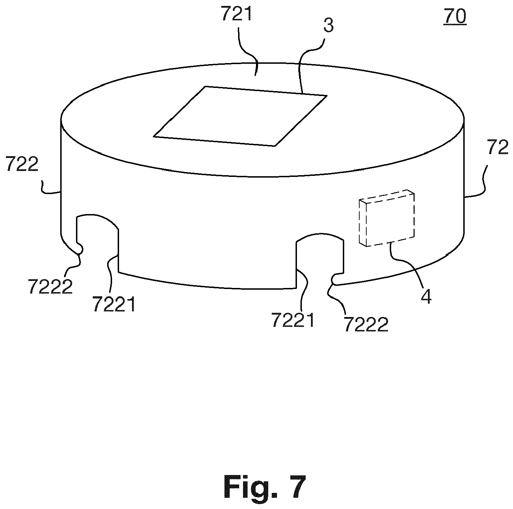

La figure 7 représente un deuxième exemple d'appareil mobile selon l'invention. L'appareil mobile 70 de la figure 7 se distingue essentiellement de l'appareil mobile 1 des figures 1 à 5 en ce que le support de fixation 72 comporte un couvercle 721, de préférence transparent et comportant l'écran d'affichage 3, et un rebord périphérique 722 sur tout le pourtour du couvercle 721. Le rebord périphérique 722 est agencé pour venir recouvrir le pourtour latéral d'un boîtier de montre. Il peut comporter des échancrures 7221 pour permettre le passage des cornes du boîtier de montre. Le rebord périphérique 722 peut être réalisé dans un matériau présentant des propriétés élastiques, de sorte que le support de fixation 72 s'accouple avec le boîtier de montre par déformation élastique. Le rebord périphérique 722 peut notamment comporter des ergots 7222, par exemple au niveau des échancrures 7221, aptes à venir en appui sur un fond du boîtier, en l'occurrence sous les cornes du boîtier.

Dans l'exemple de réalisation de la figure 7, le module électronique 4 peut être intégré dans le rebord périphérique 722.

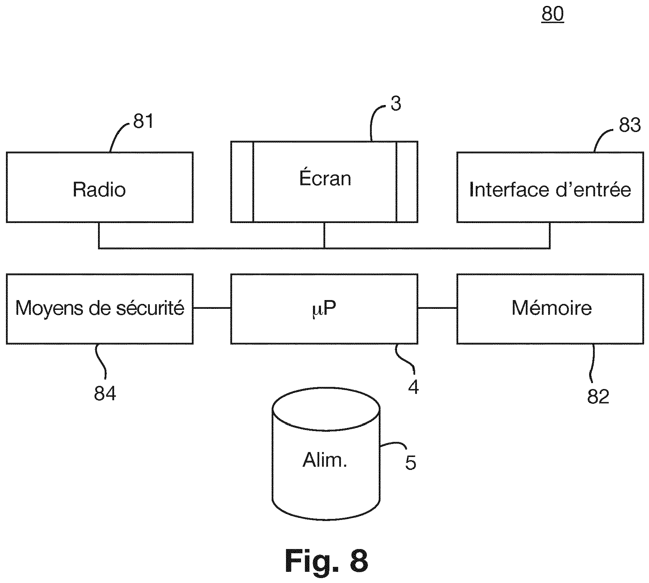

La figure 8 représente, sous forme d'un schéma bloc, un exemple d'appareil mobile selon l'invention. L'appareil mobile 80 comporte un écran d'affichage 3 et un module électronique 4. Il comporte de plus des moyens 81 de communication sans fil, des moyens 82 de stockage de données, une interface d'acquisition 83, des moyens 84 de sécurité, et des moyens 5 d'alimentation en énergie électrique. Les moyens 81 de communication sans fil comportent par exemple un émetteur-récepteur basé sur la technologie Bluetooth (norme IEEE 802.15.1) ou Wi-Fi (norme IEEE 802.11). L'appareil mobile selon l'invention peut alors échanger des données avec d'autres équipements électroniques, notamment pour les commander et/ou pour afficher sur l'écran d'affichage 3 des informations contenues et/ou traitées par ces équipements électroniques. Les moyens 82 de stockage de données peuvent comporter une mémoire de données électroniques. Il peut notamment s'agir d'une mémoire flash. L'interface d'acquisition 83 peut comporter des boutons poussoirs. Elle peut aussi être combinée avec l'écran d'affichage 3 pour former un écran tactile. Les moyens de sécurité 84 sont aptes à générer et/ou stocker des données sécurisées de l'utilisateur, par exemple des informations sur sa santé (passeport médical ou suivi de son état de santé), des informations bancaires et/ou des clés d'accès électroniques à des bâtiments, des chambres d'hôtels, ou des véhicules. Les moyens de sécurité 84 consistent par exemple en un algorithme de cryptage, ou en une mémoire de stockage. Ladite mémoire est alors de préférence intégrée dans le module électronique 4, ou sur une même carte électronique que le module électronique, afin d'empêcher un retrait de la mémoire sans destruction de l'appareil mobile 80. Les moyens 5 d'alimentation en énergie sont aptes à alimenter l'appareil mobile 80 pour le rendre autonome en énergie. Il s'agit par exemple d'une pile bouton. De préférence, les moyens 5 d'alimentation sont rechargeables. L'appareil mobile 80 comporte alors une prise avec ou sans fil pour recharger les moyens 5 d'alimentation depuis une source d'énergie externe. Ces moyens d'alimentation peuvent être intégrés dans l'appareil mobile ou déportés dans l'attache du bracelet. Ils peuvent être alimentés par énergie solaire, par ondes infrarouges, par induction, par mouvement du bras, par technique de rétrodiffusion ambiante ou par la partie mécanique de la montre de luxe.

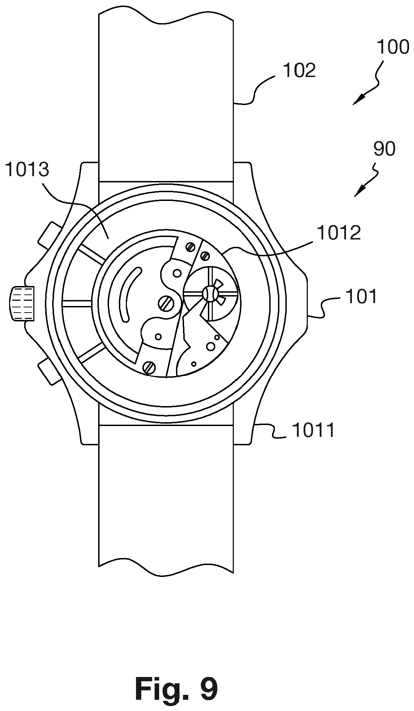

La figure 9 représente un troisième exemple de réalisation d'un appareil mobile selon l'invention. Dans cet exemple de réalisation, l'appareil mobile 90 est en partie intégré au boîtier d'une montre. La montre 100 comporte un boîtier 101 avec ses cornes 1011 et son mécanisme 1012, et un bracelet 102. Le boîtier 101 comprend un logement 1013 agencé pour accueillir le module électronique 4, non visible sur la figure 9. De préférence, ce logement 1013 est accessible depuis le fond du boîtier 101, c'est-à-dire depuis le côté de la montre opposé à la première surface extérieure du boitier contenant le cadran. Le boîtier 101 peut présenter une épaisseur et/ou un diamètre supérieur à l'épaisseur nominale et au diamètre nominal du boîtier, afin d'accueillir le module électronique 4 sans modifier le mécanisme de la montre 100. Dans l'exemple de réalisation de la figure 9, le logement 1013 est formé à la périphérie du mécanisme 1012. Il présente ainsi une forme annulaire. Le module électronique 4 et, le cas échéant, les moyens de communication sans fil, les moyens de stockage de données, les moyens de sécurité, et les moyens d'alimentation en énergie électrique sont agencés de manière à prendre une forme annulaire correspondante.

L'appareil mobile 90 selon la figure 9 peut, de manière identique aux appareils mobiles 1 et 70, comporter un écran d'affichage disposé sur au moins une partie de la première surface extérieure du boîtier comportant le cadran de la montre 90. La fixation de l'écran d'affichage peut être réalisée au moyen d'un support de fixation 2 ou 72, ou bien directement intégré dans le verre de protection du boîtier de montre. Pour cette variante du troisième exemple de réalisation, le boîtier de montre doit être conçu spécifiquement par un manufacturier pour recevoir un module électronique, en sus du mécanisme traditionnel. De ce fait, la fixation de l'écran d'affichage est, de préférence, réalisée par le manufacturier sur le boîtier. L'écran d'affichage pourrait éventuellement être confondu avec le verre de protection. Du fait de l'intégration du module électronique 4 dans le boîtier 101 de la montre 100, le support de fixation 2, 72 peut être facilement dépourvu de fond, comme représenté sur la figure 7, ou comporter un fond évidé, comme représenté sur les figures 1 à 4. Des moyens de connexion entre l'écran d'affichage et le module électronique sont prévus. Ils peuvent notamment comporter une interface de contact sur le boîtier 101 de la montre 100.

Dans les différents exemples de réalisation de l'appareil mobile, il a été considéré que l'écran d'affichage était disposé sur une partie fixe du support de fixation. Autrement dit, il a été considéré que dans la configuration où l'appareil mobile équipe l'objet de valeur, l'écran d'affichage est solidaire du boîtier de l'objet de valeur. Néanmoins, le support de fixation peut être agencé de manière à laisser un ou plusieurs degrés de liberté en rotation et/ou en translation entre l'écran d'affichage et le boîtier de l'objet de valeur. En particulier, la partie du support de fixation portant l'écran d'affichage peut être en liaison pivot ou en liaison glissière avec les parties du support de fixation rendues solidaires du boîtier.

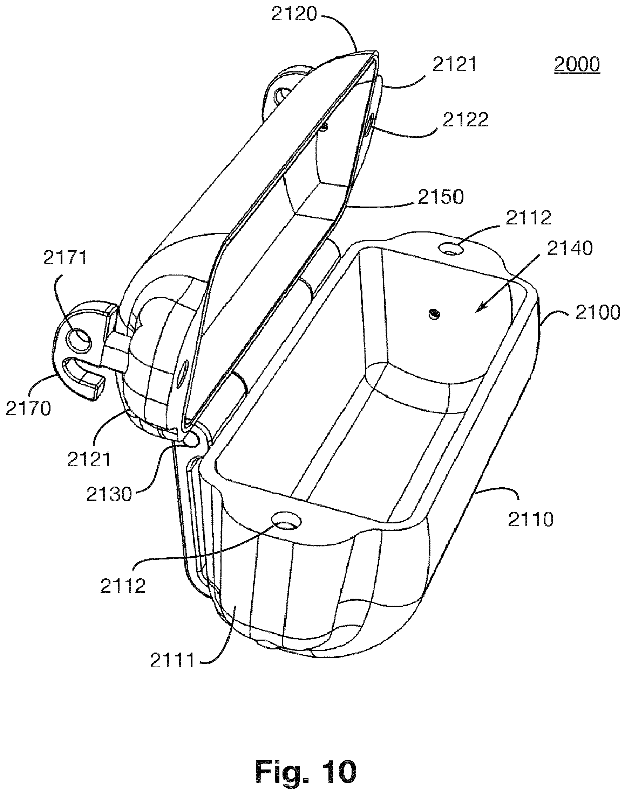

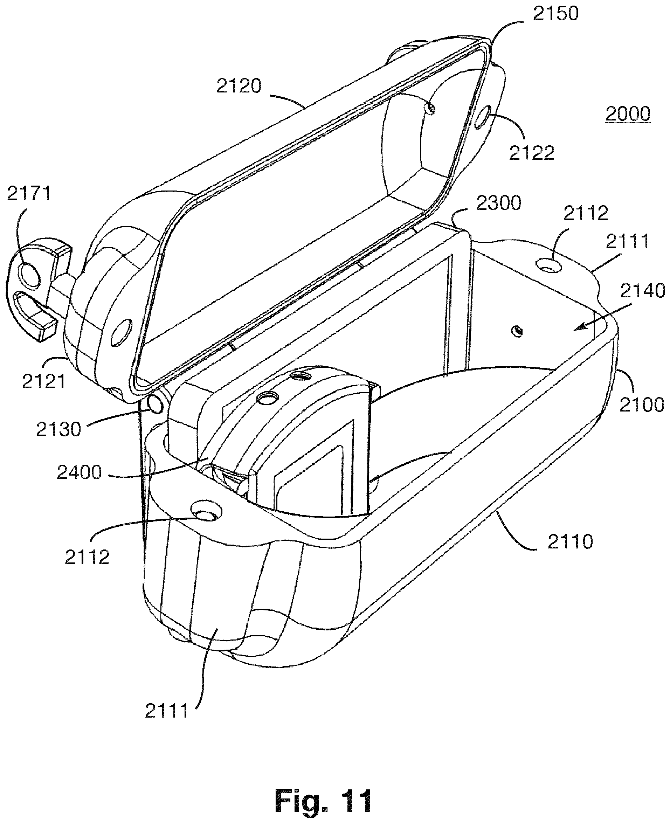

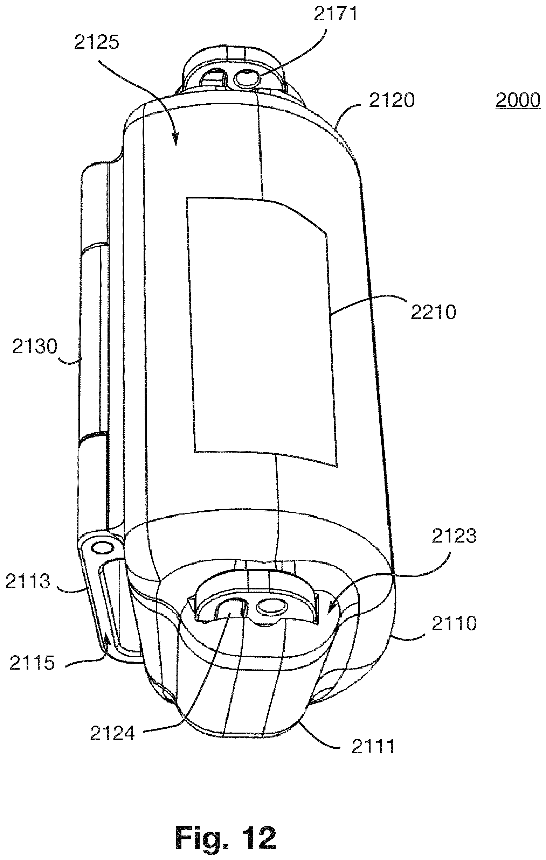

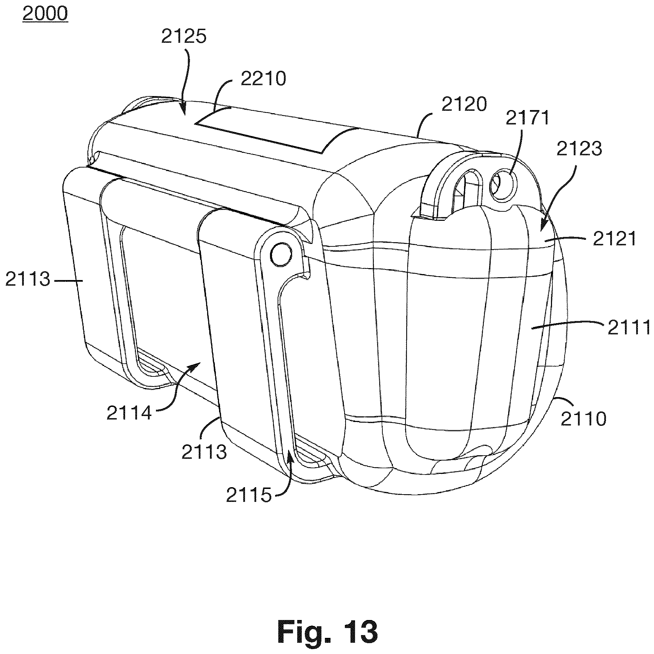

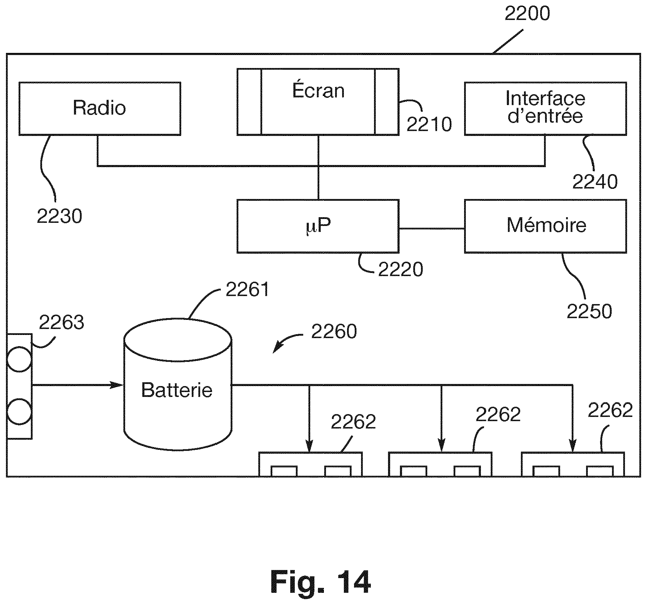

Les figures 10 à 13 représentent, dans différentes vues, un exemple de réalisation d'un coffre de protection interactif selon l'invention. La figure 10 représente le coffre de protection interactif dans une position dite ouverte. La figure 11 représente le coffre de protection dans la position ouverte avec des objets de valeur disposés à l'intérieur. Les figures 12 et 13 représentent le coffre de protection dans une position dite fermée. Le coffre de protection 2000 comporte un boîtier 2100 et des moyens de communication et d'information. Les moyens de communication et d'information sont décrits plus en détail en référence à la figure 14. Ils comprennent notamment un écran d'affichage 2210, visible sur les figures 12 et 13. Le boîtier 2100 comprend un corps 2110, un couvercle 2120, et une charnière 2130. Le corps 2110 et le couvercle 2120 sont évidés afin de former un compartiment 2140 apte à accueillir des objets de valeur tels qu'une montre, des billets de banque, une carte de crédit, une clef d'un véhicule automobile, un téléphone portable, une clef USB, ou l'appareil mobile décrit précédemment. Dans l'exemple représenté sur la figure 11, le compartiment 2140 contient un téléphone portable 2300 et une montre 2400 équipée de l'appareil mobile selon l'invention. Le compartiment 2140 peut être divisé en plusieurs sous-compartiments. La charnière 2130 forme un moyen de fermeture pour le boîtier 2100, en lui permettant de passer de la position ouverte, dans laquelle le corps 2110 et le couvercle 2120 sont disjoints et permettent de disposer des objets de valeur et d'y accéder, à la position fermée, dans laquelle le corps 2110 et le couvercle 2120 sont joints et ferment le compartiment 2140, de sorte à protéger les objets de valeur de l'environnement extérieur.

Le boîtier 2100 comporte aussi un joint d'étanchéité torique 2150, par exemple fixé sur un plan de joint du couvercle 2120 et venant en appui sur un plan de joint du corps 2110 dans la position fermée.

Le boîtier 2100 comporte également des moyens de verrouillage pour maintenir le boîtier dans la position fermée. Ces moyens de verrouillage comprennent des premiers bossages 2111 formés sur le corps 2110 du boîtier, des deuxièmes bossages 2121 formés sur le couvercle 2120, des vis et des écrous 2170. Les bossages 2111 et 2121 comportent chacun un trou débouchant 2112 et 2122, respectivement. Le trou débouchant 2112 de chaque premier bossage 2111 vient en regard d'un trou débouchant 2122 d'un deuxième bossage 2121, de manière à permettre à une vis de traverser les deux bossages 2111 et 2121 correspondants. Les deuxièmes bossages 2121 comportent également, sur leur surface supérieure 2123, au niveau des trous débouchants 2122, des évidements 2124. Ces évidements 2124 permettent de loger au moins une partie des écrous 2170, et d'empêcher leur rotation lors du serrage des vis. Les écrous 2170 comportent des trous de passage 2171 permettant de passer une chaîne de menottage ou un cordon. La chaîne ou le cordon peut s'enrouler autour d'une partie du corps de l'être vivant portant le coffre de protection, afin de renforcer la sécurité. Les vis peuvent être des vis de sécurité, c'est-à-dire des vis dont les têtes comportent des empreintes de forme non conventionnelle. L'ouverture du boîtier 2100 est alors rendue plus difficile par une personne non autorisée à utiliser le coffre de protection interactif 2000. Tout autre moyen de verrouillage, par serrure mécanique ou électronique est possible.

Afin de faciliter le transport du coffre de protection interactif 2000 par un être vivant, le boîtier 2100 comporte en outre des passants 2113 formés sur une surface arrière 2114 du corps 2110. Les passants 2113 permettent le passage d'une ceinture destinée à être portée par l'être vivant. Ils forment ainsi des moyens d'attache externes pour attacher le coffre de protection interactif 2000 à une partie du corps d'un être vivant, en l'occurrence à la taille de l'être vivant.

Les passants 2113 peuvent également être utilisés comme moyens de solidarisation à un socle d'accueil, comme cela est décrit plus loin.

La figure 14 représente, sous forme d'un schéma bloc, un exemple de moyens de communication et d'information du coffre de protection interactif 2000 selon l'invention. Les moyens de communication et d'information 2200 comprennent un écran d'affichage 2210, et des moyens de traitement tels qu'un microprocesseur 2220. Ils peuvent également comporter des moyens 2230 de communication sans fil, une interface d'acquisition 2240, des moyens 2250 de stockage de données et des moyens 2260 de recharge. L'écran d'affichage 2210 est de préférence disposé sur une surface supérieure 2125 du couvercle 2120. Le microprocesseur 2220 permet de traiter des données afin de les faire afficher par l'écran d'affichage 2210. Il peut notamment exécuter un logiciel tel qu'une application mobile. Les moyens 2230 de communication sans fil comportent un émetteur-récepteur d'ondes électromagnétiques, par exemple basé sur la technologie Bluetooth ou Wi-Fi. L'interface d'acquisition 2240 peut comporter des boutons poussoirs et/ou une interface tactile formée sur l'écran d'affichage 2210. Les moyens 2250 de stockage de données peuvent comprendre une mémoire, par exemple une mémoire flash apte à stocker des données informatiques. Ils peuvent être amovibles ou non. Dans le cas où ils sont amovibles, ils sont de préférence accessibles depuis l'intérieur du compartiment 2140 du boîtier 2100. Les moyens 2260 de recharge comportent un accumulateur électrique 2261, par exemple une batterie rechargeable, des connecteurs électriques 2262 reliés à l'accumulateur électrique 2261, et une prise d'alimentation 2263 également reliée à l'accumulateur électrique 2261. La prise d'alimentation 2263 peut être connectée à une source d'énergie extérieure, par exemple par l'intermédiaire du socle d'accueil décrit plus loin, de manière à recharger l'accumulateur électrique 2261. Les connecteurs électriques 2262 sont aptes à venir se connecter à des équipements électroniques placés dans le compartiment 2140. La prise d'alimentation 2263 et les connecteurs électriques 2262 peuvent prendre la forme de surfaces de contact ou d'une fiche mâle ou femelle. Ils pourraient également être remplacés par des dispositifs de transfert d'énergie sans contact, par exemple des dispositifs de couplage par induction. Les moyens de communication et d'information 2200 pourraient aussi comporter des moyens de sécurité analogues aux moyens de sécurité 84 décrits en référence à la figure 8.

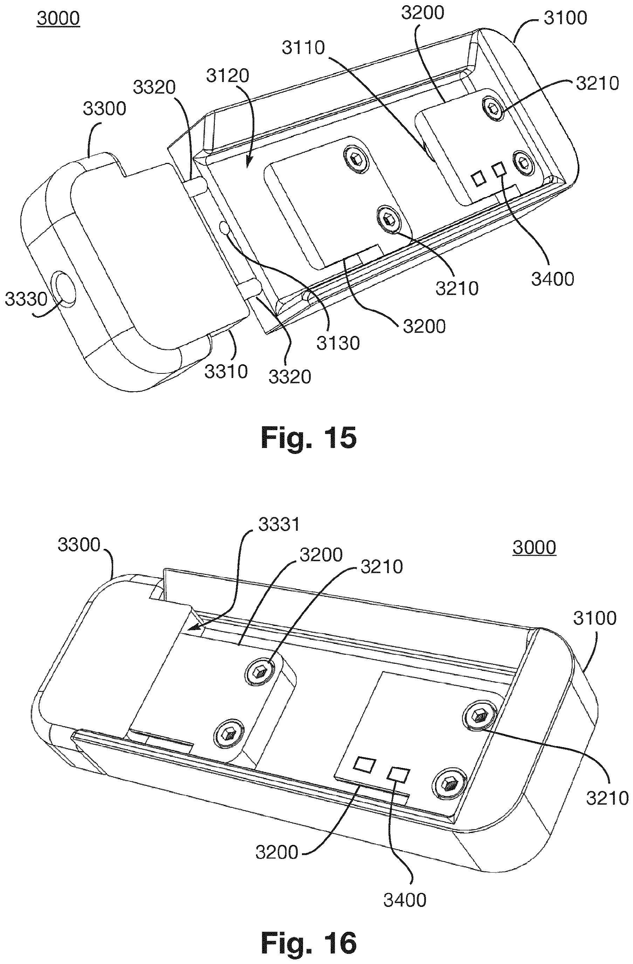

Les figures 15 et 16 représentent, dans deux vues différentes, un exemple de socle d'accueil selon l'invention sur lequel le coffre de protection interactif peut être solidarisé. La figure 15 représente le socle d'accueil dans une position dite non verrouillée, et la figure 16 représente le socle d'accueil dans une position dite verrouillée. Le socle d'accueil 3000 comporte une base 3100, deux pattes 3200, une pièce de blocage 3300 et une vis, non représentée. La base 3100 est agencée pour être fixée à un support, par exemple un mur d'un bâtiment, un châssis d'un véhicule automobile, ou une cloison d'un coffre-fort. Elle peut notamment comporter deux trous débouchants 3110, dont un seul est partiellement visible sur la figure 15, pour permettre le passage de moyens de fixation, tels que des vis, et le serrage de la base 3100 contre le support. La base 3100 comporte par exemple un renfoncement 3120 ouvert à une extrémité et formant une section en U. Le boîtier 2100 peut alors glisser dans le renfoncement 3120 jusqu'à venir en butée dans une position dite d'assemblage. Les pattes 3200 s'étendent selon l'axe de déplacement du boîtier 2100 par rapport au socle d'accueil 3000. Elles sont fixées à la base 3100 par des vis 3210. Les vis 3210, de même que les vis permettant de fixer la base 3100 au support sont de préférence inaccessibles lorsque le coffre de protection interactif 2000 est dans la position d'assemblage. La pièce de blocage 3300 comporte une pièce d'appui 3310, des tiges de guidage 3320, et un trou débouchant 3330. Les tiges de guidage 3320 permettent de guider la pièce de blocage 3300 selon le même axe que l'axe de déplacement du boîtier 2100 par rapport au socle d'accueil 3000. La pièce d'appui 3310 comporte une surface d'appui 3331 apte à venir au contact avec une surface 2115 (visible sur les figures 12 et 13) des passants 2113, de sorte à empêcher le retrait du boîtier 2100 du socle d'accueil 3000. Le trou débouchant 3300 peut accueillir une vis, de préférence une vis de sécurité, pouvant se visser dans un trou taraudé 3130 réalisé dans la base 3100. La vis de sécurité peut être vissée pour verrouiller la pièce de blocage 3300 sur la base 3100.

Le socle d'accueil 3000 comporte en outre des moyens de connexion 3400 apte à être connectés à la prise d'alimentation 2263 du coffre de protection interactif. Ces moyens de connexion 3400 sont par exemple reliés à une source d'énergie électrique extérieure, par exemple au réseau électrique d'une habitation ou d'un véhicule.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Coffre de protection interactif comprenant :
- un boîtier comportant un compartiment apte à accueillir au moins un objet à protéger et des moyens de verrouillage assurant une fermeture par serrure ;
- un écran d'affichage apte à afficher des informations ;
- des moyens de traitement aptes à générer des données relatives aux informations à afficher ; et
- des moyens de communication sans fil permettant de communiquer des données avec d'autres équipements électroniques.

2. Coffre selon la revendication 1 selon lequel les moyens de verrouillage assurent une fermeture par serrure électronique et comportent une clé électronique.

3. Coffre selon la revendication 1 ou la revendication 2 comprenant en outre un dispositif d'alarme comportant des moyens pour contrôler l'ouverture du boîtier.

4. Coffre selon la revendication 3 selon lequel les moyens pour contrôler l'ouverture du boîtier comportent des moyens d'autorisation d'accès à code ou à carte.

5. Coffre selon l'une quelconque des revendications 1 à 4 selon lequel les moyens de communication sans fil comportent des moyens de sécurité pour générer et stocker des données sécurisées de l'utilisateur comprenant une clé d'accès électronique.

6. Coffre selon l'une quelconque des revendications 1 à 5 comprenant en outre un dispositif d'alarme comportant des moyens pour signaler une ouverture non autorisée du boîtier.

7. Coffre selon la revendication 6 selon lequel les moyens pour signaler une ouverture non autorisée du boîtier comportent des moyens pour signaler l'ouverture non autorisée du boîtier à un dispositif extérieur.

8. Coffre selon la revendication 7 comprenant en outre un récepteur du système de positionnement par satellites, les moyens pour signaler une ouverture non autorisée du boîtier étant configurés pour que le signalement de l'ouverture non autorisée du boîtier soit accompagné de données relatives à la position du coffre de protection déterminée par le récepteur du système de positionnement par satellites.

9. Coffre selon l'une quelconque des revendications 1 à 8 selon lequel les moyens de communication sans fil sont configurés pour échanger des données avec un ou plusieurs équipements électroniques disposés dans le compartiment du coffre, de manière à accéder à des fonctions du ou des équipements électroniques disposés dans le compartiment du coffre.

10. Coffre selon l'une quelconque des revendications 1 à 9 comprenant une source d'énergie interne au coffre pour recharger un ou plusieurs équipements électroniques disposés dans le compartiment du boîtier et un dispositif extérieur.

11. Coffre selon l'une quelconque des revendications 1 à 10 comprenant en outre une interface d'acquisition.

12. Coffre selon la revendication 11 selon lequel l'interface d'acquisition comprend une interface tactile.

13. Coffre selon l'une quelconque des revendications 1 à 12 comprenant en outre des moyens de stockage de données, les moyens de stockage de données étant amovibles depuis l'intérieur du compartiment du boîtier.

14. Coffre selon l'une quelconque des revendications 1 à 13 selon lequel les moyens de traitement sont aptes à exécuter une application mobile.

15. Ensemble comprenant le coffre selon l'une quelconque des revendications 1 à 14 et un socle d'accueil, le boîtier comportant des moyens de solidarisation prévus pour attacher le coffre au socle d'accueil, le socle d'accueil comprenant une forme d'accroché coopérant avec une forme des moyens de solidarisation du boîtier pour positionner le coffre sur le socle d'accueil dans une position d'assemblage et des moyens de blocage agencés pour bloquer le coffre sur le socle d'accueil dans la position d'assemblage, les moyens de blocage étant du même type que les moyens de verrouillage du boîtier, par serrure et comportant une clé électronique.
